# EUROPÄISCHE PATENTSCHRIFT

(11) **EP 1 145 390 B1**
(45) Veröffentlichungstag und Bekanntmachung des Hinweises auf die Patenterteilung: **27.11.2002**
(21) Anmeldenummer: 99934709.9
(22) Anmeldetag: 19.07.1999
(51) Int. Cl.: H01S 3/07, H01S 3/081, H01S 3/094, H01S 3/23

(54) **LASERVERSTÄRKERSYSTEM**
LASER AMPLIFICATION SYSTEM
SYSTEME D'AMPLIFICATION LASER

(30) Priorität: 04.08.1998 DE 19835108
(43) Veröffentlichungstag der Anmeldung: 17.10.2001
(73) Patentinhaber: UNIVERSITÄT STUTTGART INSTITUT FÜR STRAHLWERKZEUGE, 70569 Stuttgart (DE)
(72) Erfinder: CONTAG, Karsten, D-70563 Stuttgart (DE); ERHARD, Steffen, D-70734 Fellbach (DE); GIESEN, Adolf, D-71272 Renningen (DE); KARSZEWSKI, Martin, D-71272 Renningen (DE); STEWEN, Christian, D-70771 Leinfelden-Echterdingen (DE); VOSS, Andreas, D-78713 Schramberg (DE)
(74) Vertreter: Beck, Jürgen,
(86) Internationale Anmeldenummer: EP9905128
(87) Internationale Veröffentlichungsnummer: WO00008726

(56) Entgegenhaltungen:
- EP-A- 0 632 551
- DE-A- 19 541 020
- US-A- 5 148 441
- PATENT ABSTRACTS OF JAPAN vol. 1995, no. 06, 31. Juli 1995 (1995-07-31) & JP 07 079038 A (TOKIN CORP), 20. März 1995 (1995-03-20)

## Beschreibung

Die Erfindung betrifft ein Laserverstärkersystem umfassend mehrere ein laseraktives Medium aufweisende Festkörpervolumina, eine Pumpstrahlungsquelle zur Erzeugung eines Pumpstrahlungsfeldes zum optischen Pumpen des laseraktiven Mediums, einen jedem Festkörpervolumen zugeordneten Pumpstrahlungsreflektor, der einen in das Festkörpervolumen einfallenden Ast des Pumpstrahlungsfeldes als ausfallenden Ast durch das Festkörpervolumen erneut so hindurchtreten läßt, daß der einfallende Ast und der ausfallende Ast in einer Ebene liegend einen Winkel miteinander einschließen und dabei einen ersten Pumpzweig bilden, einen ersten Pumpstrahlungsdurchlauf durch die Festkörpervolumina, in welchem die ersten Pumpzweige so aufeinanderfolgend angeordnet sind, daß die mehreren Festkörpervolumina vom Pumpstrahlungsfeld in einer ersten Sequenz durchlaufen werden.

Derartige Laserverstärkersysteme sind beispielsweise aus der EP 0 632 551 bekannt.

Bei Laserverstärkungssystemen mit mehreren laseraktives Medium aufweisenden Festkörpervolumina besteht das Problem, daß eine Pumplichtanregung der einzelnen Festkörper mit unterschiedlicher Pumpleistung erfolgt.

Der Erfindung liegt daher die Aufgabe zugrunde, ein Laserverstärkersystem mit mehreren Festkörpervolumina zu schaffen, bei welchem die einzelnen Festkörpervolumina möglichst gleichmäßig mit Pumpleistung beaufschlagt sind.

Diese Aufgabe wird bei einem Laserverstärkersystem der eingangs beschriebenen Art erfindungsgemäß dadurch gelöst, daß jedes Festkörpervolumen von einem zweiten Pumpzweig durchsetzt ist, dessen einfallender Ast und dessen ausfallender Ast in einer zweiten, von der ersten Ebene verschiedenen Ebene liegen und in dieser einen Winkel miteinander einschließen, daß ein zweiter Pumpstrahlungsdurchlauf vorgesehen ist, in welchem die zweiten Pumpzweige der mehreren Festkörpervolumina so aufeinanderfolgend angeordnet sind, daß die Festkörpervolumina vom Pumpstrahlungsfeld in einer zweiten Sequenz durchlaufen werden.

Der Vorteil der erfindungsgemäßen Lösung ist darin zu sehen, daß mit dem zweiten Pumpstrahlungsdurchlauf die Möglichkeit geschaffen ist, jedes der Festkörpervolumen mit derselben Zahl von Pumpzweigen zu pumpen und zusätzlich aufgrund der Tatsache, daß die beiden Pumpzweige in unterschiedlichen Ebenen liegen, auch noch die Pumpleistung in dem zu pumpenden Festkörpervolumen möglichst gleichmäßig einzubringen.

Dies hat insbesondere im Hinblick auf die bei der erfindungsgemäßen Lösung vorgesehenen Art der dünnen scheibenförmigen Festkörper, die vorzugsweise mit einer Flachseite auf einer Kühlfläche liegen, den Vorteil, daß damit die Ausbildung eines möglichst gleichmäßigen Temperaturverlaufs mit zu den Flachseiten des Festkörpers parallel verlaufenden Ebenen im wesentlichen gleicher Temperatur erleichtert ist, die für das vorteilhafte Arbeiten im Rahmen des erfindungsgemäßen Konzepts wesentlich ist.

Besonders günstig ist es, wenn in der zweiten Sequenz die Reihenfolge der Festkörper bezogen auf die erste Sequenz geändert ist. Diese Lösung erlaubt durch die geänderte Reihenfolge der Intensitätsabnahme in der Sequenz entgegenzuwirken.

Hinsichtlich der Art der Speisung des ersten und zweiten Pumpstrahlungsdurchlaufs wurden bislang keine näheren Angaben gemacht. So sieht ein vorteilhaftes Ausführungsbeispiel vor, daß jeder der Pumplichtstrahlungsdurchläufe von einer eigenen Pumpstrahlungsquelle gespeist ist, wobei vorzugsweise vorgesehen ist, daß die Pumpstrahlungsquellen im wesentlichen dieselbe Leistung aufweisen.

Eine andere alternative Ausführungsform sieht vor, daß die Pumpstrahlungsdurchläufe von einer einzigen Pumpstrahlungsquelle gespeist sind. Dies hat den Vorteil, daß - sofern die Strahlungsleistung einer einzigen Pumpstrahlungsquelle ausreichend ist - diese für beide Pumpstrahlungsdurchläufe eingesetzt werden kann.

Dabei bestehen unterschiedliche Möglichkeiten, die Speisung der beiden Pumpstrahlungsdurchläufe mit einer Pumpstrahlungsquelle zu realisieren.

Eine Möglichkeit besteht darin, das Pumpstrahlungsfeld aus der Pumpstrahlungsquelle durch einen Strahlteiler auf die beiden Pumpstrahlungsdurchläufe zu verteilen.

Diese Lösung hat den Vorteil, daß damit die Möglichkeit besteht, beide Pumpstrahlungsdurchläufe mit Pumpstrahlungsfeldern von im wesentlichen derselben Intensität zu versorgen.

Eine andere vorteilhafte Lösung sieht vor, daß die Pumpstrahlungsdurchläufe durch eine Umlenkoptik miteinander gekoppelt sind, das heißt, daß das Pumpstrahlungsfeld mit der Intensität, die am Ende eines der Pumpstrahlungsdurchläufe noch vorhanden ist, durch eine Umlenkoptik so eingekoppelt wird, daß dieses den nächsten Pumpstrahlungsdurchlauf speist. Diese Lösung ist insbesondere dann zweckmäßig, wenn die absorbierte Intensität pro Pumpstrahlungsdurchlauf nicht sehr groß ist, so daß nach den ersten Pumpstrahlungsdurchlauf dennoch eine Leistung des Pumpstrahlungsfeldes zur Verfügung steht, welche ausreichend groß ist, um den zweiten Pumpstrahlungsdurchlauf zu speisen.

Prinzipiell ist im Rahmen der erfindungsgemäßen Lösung vorgesehen, daß das Pumpstrahlungsfeld jeden Pumpstrahlungsdurchlauf in einer Richtung durchläuft. Zur Verbesserung des Pumpens der Festkörper ist es ferner jedoch vorteilhaft, wenn das Pumpstrahlungsfeld jeden Pumpstrahlungsdurchlauf in zwei entgegengesetzten Richtungen durchläuft. Dies ist unabhängig davon, ob zwei Pumpstrahlungsquellen zum Speisen der Pumpstrahlungsdurchläufe vorgesehen sind oder nur eine Pumpstrahlungsquelle, deren Leistung in den bereits beschriebenen unterschiedlichen Art und Weisen in die Pumpstrahlungsdurchläufe eingekoppelt werden kann.

Eine besonders einfach realisierbare Lösung, bei welcher jeder Pumpstrahlungsdurchlauf von dem Pumpstrahlungsfeld zweimal durchlaufen wird, sieht vor, daß an einem Ende jedes Pumpstrahlungsdurchlaufs ein Reflektor angeordnet ist, der das aus dem Pumpstrahlungsdurchlauf austretende Pumpstrahlungsfeld zurückreflektiert.

Im Zusammenhang mit den bisherigen Lösungen wurde lediglich spezifiziert, daß die Reihenfolge der Festkörpervolumina in der zweiten Sequenz anders sein soll als in der ersten Sequenz. Dies ist in unterschiedlichster Art und Weise realisierbar, insbesondere dann in unterschiedlicher Art und Weise, wenn nicht nur eine erste Sequenz und eine zweite Sequenz vorgesehen sind, sondern mehrere, über die erste und die zweite Sequenz hinausgehende Sequenzen. Im einfachsten Fall einer ersten und zweiten Sequenz ist jedoch vorzugsweise vorgesehen, daß die Reihenfolge der Festkörpervolumina in der zweiten Sequenz bezogen auf die erste Sequenz umgekehrt ist.

Bislang wurde im Zusammenhang mit der erfindungsgemäßen Lösung spezifiziert, daß es einen ersten Pumpstrahlungsdurchlauf und einen zweiten Pumpstrahlungsdurchlauf gibt. Die erfindungsgemäße Lösung ist jedoch nicht auf zwei Pumpstrahlungsdurchläufe mit ersten bzw. zweiten Pumpzweigen limitiert. Vielmehr besteht bei einer weiteren erfindungsgemäßen Lösung die Möglichkeit, daß mindestens ein weiterer Pumpstrahlungsdurchlauf vorgesehen ist, bei welchem das Pumpstrahlungsfeld die Festkörper in Form mindestens einer weiteren Sequenz durchläuft. Der Vorteil dieser Lösung ist darin zu sehen, daß damit eine noch gleichmäßigere Anregung der Festkörper realisierbar ist.

Besonders günstig läßt sich dies dann realisieren, wenn die mindestens eine weitere Sequenz so verläuft, daß diese unterschiedlichen Pumpanregungen des laseraktiven Materials im Festkörpervolumen durch die erste und die zweite Sequenz entgegenwirkt.

Insbesondere ist es vorteilhaft, wenn die Zahl der Pumpstrahlungsdurchläufe eine gerade Zahl ist, so daß sich besonders günstig die Tatsache kompensieren läßt, daß bei jedem Pumpstrahlungsdurchlauf das Pumpstrahlungsfeld von einem Pumpzweig zum anderen Pumpzweig mit geringerer Leistung pumpt.

Hinsichtlich der Art, wie die einzelnen Pumpzweige eines Pumpstrahlungsdurchlaufs gekoppelt sind, wurden keine Angaben im Detail gemacht. So sieht eine vorteilhafte Ausführungsform vor, daß die einzelnen Pumpzweige eines Pumpstrahlungsdurchlaufs durch Refokussierungsoptiken gekoppelt sind.

Diese Refokussierungsoptiken können in unterschiedlichster Art und Weise ausgebildet sein. So sieht eine Art der Ausbildung vor, daß die Refokussierungsoptiken den ausfallenden Ast eines Pumpzweigs direkt in den entsprechenden einfallenden Ast des nächsten Pumpzweiges abbilden.

Der Vorteil dieser Lösungen liegt in ihrer Einfachheit. Diese Lösungen haben jedoch das Problem, daß sich entweder der Pumplichtstrahlungsfleck vergrößert oder ein Querschnitt des Pumpstrahlungsfeldes von Refokussierungsoptik zu Refokussierungsoptik immer größer wird.

Aus diesem Grund sieht eine diesbezüglich verbesserte erfindungsgemäße Lösung vor, daß mindestens eine der Refokussierungsoptiken als zwischenkollimierende Refokussierungsoptik ausgebildet ist und jeweils den ausfallenden Ast über einen zwischenkollimierten Ast in den entsprechenden einfallenden Ast abbildet. Diese Lösung hat den Vorteil, daß durch die Zwischenkollimation die Möglichkeit besteht, eine Vergrößerung des Querschnitts des Pumpstrahlungsfeldes zu vermeiden.

Vorzugsweise sind dabei die zwischenkollimierten Äste so ausgebildet, daß deren Abbildung der Abbildung entspricht, die man bei der Summe der Brennweiten der beiderseits des zwischenkollimierten Asts vorgesehenen Optiken erhält. Im Fall von Optiken gleicher Brennweite beiderseits des zwischenkollimierten Astes beträgt die Abbildung des zwischenkollimierten Astes einer solchen mit doppelter Brennweite.

Besonders günstig ist es dabei, wenn sämtliche Refokussierungsoptiken als zwischenkollimierende Refokussierungsoptiken ausgebildet sind, so daß im gesamten Verlauf des jeweiligen Pumpstrahlungsdurchlaufs keine nennenswerte Vergrößerung des Querschnitts des Pumpstrahlungsfelds erfolgt und somit weder die Notwendigkeit besteht, einen Teil des Strahlungsfeldes nicht abzubilden oder die Refokussierungsoptiken der zunehmenden Größe des Querschnitts der Pumpstrahlungsfelder anzupassen.

Eine besonders vorteilhafte Realisierung einer zwischenkollimierenden Refokussierungsoptik sieht vor, daß diese einen gefalteten kollimierten Ast aufweist. Ein derartiger gefalteter kollimierter Ast schafft insbesondere die Möglichkeit, die Refokussierungsoptiken raumsparend auszubilden.

Ferner schafft eine Faltung des kollimierten Astes die Möglichkeit, die in die jeweiligen Festkörper einfallenden Äste so anzuordnen, daß diese immer von derselben Seite der Festkörpervolumina in diese einfallen.

Hinsichtlich der Ausbildung der zwischenkollimierenden Refokussierungsoptiken im einzelnen wurden bislang keine näheren Angaben gemacht. So ist es zur Erzeugung eines gefalteten kollimierten Astes günstig, wenn die zwischenkollimierenden Refokussierungsoptiken ein Umlenkelement zur Faltung des zwischenkollimierten Astes aufweisen.

Zum Einsparen von Bauteilen bei den bauteilaufwendigen zwischenkollimierenden Refokussierungsoptiken ist vorzugsweise vorgesehen, daß jeweils eine der zwischenkollimierenden Refokussierungsoptiken des ersten und eine der zwischenkollimierenden Refokussierungsoptiken des zweiten Pumpstrahlungsdurchlaufs den jeweiligen zwischenkollimierten Ast auf ein gemeinsames Umlenkelement abbilden, so daß nur ein Umlenkelement für je zwei Refokussierungsoptiken erforderlich ist.

Ferner wurden hinsichtlich der Ausbildung der zwischenkollimierenden Refokussierungsoptiken insgesamt keine näheren Angaben gemacht. So ist günstigerweise vorgesehen, daß die zwischenkollimierenden Refokussierungsoptiken ein kollimierendes Element aufweisen, welches den jeweils ausfallenden Ast in den zwischenkollimierten Ast abbildet.

Ferner ist es günstig, wenn die zwischenkollimierenden Refokussierungsoptiken ein fokussierendes Element aufweisen, welches den zwischenkollimierten Ast in den jeweils einfallenden Ast abbilden.

Hinsichtlich der optischen Elemente, die in den Refokussierungsoptiken Verwendung finden, wurden bislang noch keine näheren Angaben gemacht.

Hinsichtlich der Einfachheit im Aufbau und des Raumbedarfs hat es sich als besonders vorteilhaft erwiesen, wenn die Refokussierungsoptiken Hohlspiegel umfassen, wobei die Hohlspiegel insbesondere dazu dienen, die ausfallenden Äste eines Pumpzweigs direkt in die entsprechenden einfallenden Äste des nächsten Pumpzweigs umzuformen oder dazu dienen, als kollimierende und fokussierende Elemente zu wirken.

Um besonders gute optische Abbildungen zu erhalten, ist vorzugsweise vorgesehen, daß die Hohlspiegel als nicht sphärische Spiegel ausgebildet sind, da mit sphärischen Spiegeln stets eine nicht unerhebliche Verzerrung auftritt, die bei Mehrfachumformung des Pumpstrahlungsfelds die Qualität der optischen Abbildung dann zu sehr verschlechtert.

Ein Ausführungsbeispiel, insbesondere bei Hohlspiegeln, welche einen ausfallenden Ast eines Pumpzweigs direkt in einen einfallenden Ast des nächsten Pumpzweigs umformen, sieht vor, daß die Hohlspiegel als elliptische Spiegel ausgebildet sind, mit der elliptischen Form der Spiegel läßt sich dabei unter Anpassung der Form eine gute Qualität der optischen Abbildung erreichen.

Eine andere alternative Ausführungsform, insbesondere eine solche, bei welcher der Hohlspiegel ein kollimierendes oder fokussierendes Element darstellen soll, sieht vor, daß der Hohlspiegel als parabolischer Spiegel ausgebildet ist, da ein parabolischer Spiegel stets in der Lage ist, einen kollimierten Ast zu fokussieren oder umgekehrt einen divergenten Ast zu kollimieren.

Sowohl die Verwendung von elliptischen Spiegeln als auch die Verwendung von parabolischen Spiegeln ist kostenintensiv, da diese Spiegel aufwendig herzustellen sind.

Aus diesem Grund sieht eine vorteilhafte Lösung vor, daß die Hohlspiegel als torische Spiegel ausgebildet sind. Derartige torische Spiegel können sowohl elliptische Spiegel als auch parabolische Spiegel ersetzen, wobei die Qualität der optischen Abbildungen insbesondere bei langen Brennweiten noch ausreichend gut ist.

Hinsichtlich der Anordnung der Festkörpervolumina relativ zueinander wurden keine näheren Angaben gemacht. So wären prinzipiell die unterschiedlichsten Anordnungen der Festkörpervolumina relativ zueinander denkbar. Konstruktiv besonders günstig läßt sich das erfindungsgemäße Konzept dann realisieren, wenn die Festkörpervolumina längs einer Linie angeordnet sind, wobei die Linie prinzipiell eine gekrümmte oder eine gerade Linie sein kann. Besonders raumsparend lassen sich die einzelnen Refokussierungsoptiken dann anordnen, wenn die Festkörpervolumina längs einer geraden Linie angeordnet sind.

Ferner ist vorzugsweise vorgesehen, daß alle Reflexionsflächen der den Festkörpervolumina zugeordneten Reflektoren in einer gemeinsamen Ebene liegen. In diesem Fall liegen die dann durch die Festkörpervolumina hindurchverlaufenden ersten und zweiten Pumpzweige des Pumpstrahlungsfeldes in Ebenen, die senkrecht auf der gemeinsamen Ebene der Reflexionsflächen aller Reflektoren stehen.

Vorzugsweise lassen sich in diesem Fall die Refokussierungselemente auf unterschiedlichen Seiten einer senkrecht auf den Reflexionsflächen stehenden und durch die Linie hindurchverlaufenden Fläche anordnen, wobei sich vorzugsweise ein Pumpzweig des Pumpstrahlungsfeldes zwischen einem auf einer Seite der Fläche liegenden Refokussierungselement zu einem auf der anderen Seite der Flächen liegenden Refokussierungselement erstreckt.

Hinsichtlich der unterschiedlichen Ebenen, in welchen die ersten und zweiten Pumpzweige liegen sollen, wurden bislang ebenfalls keine näheren Angaben gemacht. So sieht ein vorteilhaftes Ausführungsbeispiel vor, daß die Ebenen, in welchen die ersten und zweiten Pumpzweige liegen, in einem Winkel von kleiner gleich 90° schneiden.

Hinsichtlich der Anordnung der Festkörpervolumina wurde im Zusammenhang mit der bisherigen Erläuterung der einzelnen Ausführungsbeispiele keine näheren Angaben gemacht. So wäre es beispielsweise denkbar, insbesondere bei einer räumlich sehr kleinen Ausführung der erfindungsgemäßen Lösung, sämtliche Festkörpervolumina in einem Festkörper vorzusehen. Aus Gründen der räumlichen Ausführung ist es insbesondere bei großen Leistungen und somit großen Festkörpervolumina vorteilhaft, wenn die mehreren laseraktives Medium aufweisenden Festkörpervolumina in mehreren Festkörpern angeordnet sind, wobei nach wie vor in jedem Festkörper eine Mehrzahl von Festkörpervolumina vorgesehen sein kann.

Insbesondere beim Erreichen von großen Leistungen ist es vorteilhaft, wenn jedes laseraktives Medium aufweisende Festkörpervolumen in einem eigenen Festkörper angeordnet ist, so daß insbesondere bei großen Leistungen in dem jeweiligen Festkörper für eine optimale Kühlung desselben gesorgt werden kann.

Weitere Merkmale und Vorteile der Erfindung sind Gegenstand der nachfolgenden Beschreibung sowie der zeichnerischen Darstellung einiger Ausführungsbeispiele.

In der Zeichnung zeigen:
- Fig. 1: eine schematische Draufsicht auf ein erfindungsgemäßes Laserverstärkersystem in Richtung des Pfeils A in Fig. 2 mit schematisch angedeutetem Verlauf der Pumpzweige und Pumpstrahlungsdurchläufe;
- Fig. 2: eine perspektivische schematische Darstellung des in Fig. 1 dargestellten ersten Ausführungsbeispiels des erfindungsgemäßen Laserverstärkersystems mit räumlich dargestelltem erstem Pumpstrahlungsdurchlauf und einem durch eine gestrichelte Mittellinie dargestellten zweiten Pumpstrahlungsdurchlauf;
- Fig. 3: eine Darstellung ähnlich Fig. 1 eines zweiten Ausführungsbeispiels;
- Fig. 4: eine Darstellung ähnlich Fig. 1 eines dritten Ausführungsbeispiels mit zwischenkollimierenden Refokussierungselementen;
- Fig. 5: eine schematische perspektivische Darstellung des dritten Ausführungsbeispiels gemäß Fig. 4 mit voll durchgezeichnetem erstem Pumpstrahlungsdurchlauf und durch gestrichelte Mittellinien angedeutetem zweitem Pumpstrahlungsdurchlauf;
- Fig. 6: eine schematische perspektivische Darstellung eines Laserresonators des dritten Ausführungsbeispiels ohne Darstellung des Pumpstrahlungsfeldes und
- Fig. 7: eine schematische Darstellung ähnlich Fig. 1 eines vierten Ausführungsbeispiels der erfindungsgemäßen Lösung.

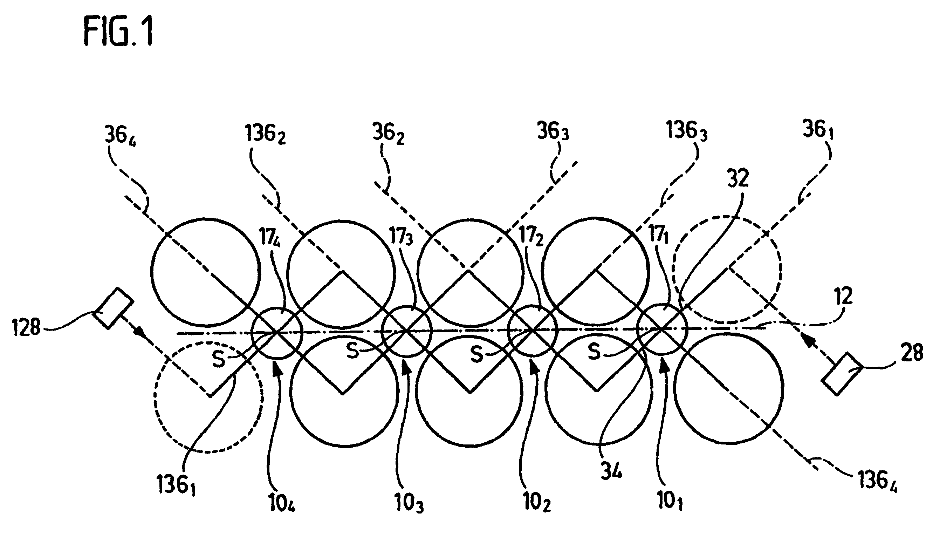

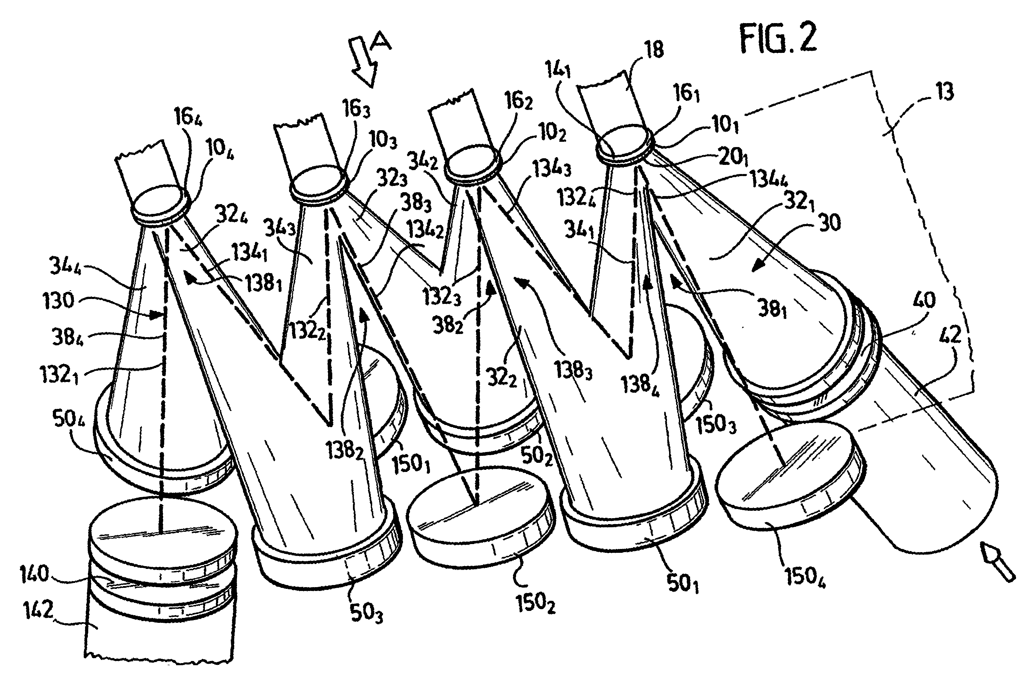

Ein in Fig. 1 und 2 dargestelltes erstes Ausführungsbeispiel eines erfindungsgemäßen Laserverstärkersystems umfaßt mehrere Festkörper 10, in diesem Fall die Festkörper 10₁ bis 10₄, welche beispielsweise längs einer Linie 12 angeordnet sind, die sowohl eine gerade als auch eine gebogene Linie sein kann. Jeder der Festkörper 10 weist ein mit einem Pumpstrahlungsfeld zu pumpendes laseraktives Medium in einem Festkörpervolumenbereich desselben auf.

Jeder der Festkörper 10 ist als flache Scheibe mit zwei einander gegenüberliegenden leicht gewölbten oder ebenen Flachseiten ausgebildet und liegt mit einer rückwärtigen Flachseite 14 jeweils auf einem Reflektor 16 auf, welcher seinerseits auf einem Kühlfinger 18 angeordnet ist, so daß eine Kühlung des Festkörpers 10 durch den Kühlfinger 18 über den Reflektor 16 erfolgt.

Durch die vordere Flachseite 20 tritt einerseits das Pumpstrahlungsfeld in den Festkörper 10 ein, um das laseraktive Medium zu pumpen und andererseits tritt durch die vordere Flachseite 20 auch die Laserstrahlung aus, deren Führung in den Figuren 1 und 2 aus Gründen der Übersichtlichkeit nicht im einzelnen dargestellt ist.

Erfindungsgemäß ist der Reflektor 16 so ausgebildet, daß er mindestens das Pumpstrahlungsfeld vorzugsweise aber auch die sich ausbildende Laserstrahlung reflektiert.

Hinsichtlich der Art der Ausbildung des Festkörpers 10 und der Art des Pumpens des Festkörpers 10, der Anordnung des Reflektors 16 und des Kühlfingers 18 wird auf die EP 0 632 551 vollinhaltlich Bezug genommen.

Das Pumpstrahlungsfeld 30 bildet, wie in Fig. 1 und 2 dargestellt, einen in den Festkörper 10₁ einfallenden Ast 32₁ des Pumpstrahlungsfeldes 30, welcher nach Hindurchtreten durch den Festkörper 10 von dem Reflektor 16 reflektiert wird und als ausfallender Ast 34₁ den Festkörper nochmals von seiten des Reflektors 16 her durchsetzt.

Der einfallende Ast 32₁ und der ausfallende Ast 34₁ verlaufen dabei parallel und symmetrisch zu einer Ebene 36 und bilden einen als Ganzes mit 38₁ bezeichneten Pumpzweig für den ersten Festkörper 10₁.

Vorzugsweise ist der einfallende Ast 32₁ auf den Festkörper 10 fokussiert, beispielsweise mittels einer Fokussierungsoptik 40, welche einen einfallenden kollimierten Ast 42 des Pumpstrahlungsfeldes 30 auf den im Bereich des Festkörpers 10 gewünschten Pumplichtfleck fokussiert.

Der ausfallende Ast 34₁ verläuft daher ausgehend vom Festkörper 10 aus divergent und trifft auf eine als Ganzes mit 50 bezeichnete Refokussierungsoptik, welche im einfachsten Fall, wie in Figur 2 dargestellt, als refokussierter Spiegel, vorzugsweise als refokussierter Hohlspiegel, ausgebildet ist, welcher den ausfallenden Ast 34₁ in einen einfallenden Ast 32₂ für den Festkörper 10₂ abbildet, aus dem dann wiederum ein ausfallender Ast 34₂ austritt, der seinerseits auf die Refokussierungsoptik 50₂ trifft, die den ausfallenden Ast 34₂ wiederum in einen einfallenden Ast 32₃ ausbildet, welcher in den Festkörper 10₃ eintritt und von dem entsprechenden Reflektor 16₃ wiederum reflektiert wird und als ausfallender Ast 34₃ auf eine dritte Refokussierungsoptik 50₃ trifft, die den ausfallenden Ast 34₃ in einen einfallenden Ast 32₄ abbildet, der auf den Festkörper 10₄ trifft, von dem Reflektor 16₄ desselben reflektiert wird und als ausfallender Ast 34₄ aus dem Festkörper 10 austritt.

Der einfallende Ast 32₂ und der ausfallende Ast 34₂ bilden gemeinsam einen auf den Pumpzweig 38₁ folgenden Pumpzweig 38₂, danach folgt, gebildet durch den einfallenden Ast 32₃ und den ausfallenden Ast 34₃ die Bildung eines weiteren Pumpzweiges 38₃ und schließlich durch den einfallenden Ast 32₄ und den ausfallenden Ast 34₄ die Bildung eines weiteren Pumpzweiges 38₄.

Alle Pumpzweige 38₁ bis 38₄ werden vom Pumpstrahlungsfeld nacheinander in Serie durchlaufen, wobei die entsprechenden Ebenen 36₁ bis 36₄ jeweils ein Winkel von ≤ 180° miteinander einschließen. Beispielsweise sind in diesem Fall die Refokussierungsoptiken 50₁ bis 50₃ alternierend bezüglich der Linie 12 angeordnet.

Mit einer derartigen Reihe von Pumpzweigen 38₁ bis 38₄ läßt sich das laseraktive Medium in den vier Festkörpern 10₁ bis 10₄ gleichzeitig pumpen, wobei allerdings die Pumpintensität bei den laseraktiven Medien der einzelnen Festkörper 10 der Reihe sukzessive abnimmt, da beispielsweise der erste Festkörper 10₁ bereits einen Teil der Intensität des einfallenden Astes 32₁ bis zum Auftreffen desselben auf den Reflektor 16 absorbiert, so daß bereits der ausfallende Ast 34₁ bei seinem Ausgangspunkt auf dem Reflektor 16 eine geringere Intensität aufweist, die sich aufgrund des nochmaligen Durchsetzens des Festkörpers 10 weiter verringert.

Nach dem ersten Ast 38₁ wird das hinsichtlich seiner Intensität reduzierte Pumpstrahlungsfeld durch die Refokussierungsoptik 50₁ erneut auf den Festkörper 10₂ in Form des einfallenden Astes 32₂ auf den zweiten Festkörper 10₂ fokussiert, wobei wiederum im zweiten Pumpzweig 38₂ die Intensität des Pumpstrahlungsfeldes beim zweifachen Durchgang durch den Festkörper 10₂ abnimmt, so daß bereits am Ende des zweiten Pumpzweigs 38₂ eine durch insgesamt 4-fachen Durchgang durch einen Festkörper 10 reduzierte Intensität für das Pumpen des dritten Festkörpers 10₃ zur Verfügung steht, wobei dann das Pumpen des dritten Festkörpers 10₃ erneut aufgrund des 2-fachen Durchgangs durch den Festkörper Intensität absorbiert und schließlich die im vierten Pumpzweig 38₄ zum Pumpen des Festkörpers 10₄ zur Verfügung stehende Intensität bereits durch eine aufgrund eines 6-fachen Durchgangs durch eine der Festkörper 10₁ bis 10₄ verringert ist.

Nachdem alle vier Festkörper 10₄ von dem Pumpstrahlungsfeld mit den Ästen 38₁ bis 38₄ im Rahmen eines ersten Pumpstrahlungsdurchlaufs durchlaufen sind, bleibt in der Regel im ausfallenden Ast 34₄ noch eine nennenswerte Intensität vor, so daß es sich anbietet, die Refokussierungsoptik 50₄ so auszubilden, daß diese den Lichtweg im ersten Pumpstrahlungsdurchlauf umkehrt und den ausfallenden Ast 34₄ in sich zurückreflektiert, so daß insgesamt die gesamten Pumpzweige 38₄, 38₃, 38₂ und 38₁ vom Pumpstrahlungsfeld in umgekehrter Reihenfolge durchlaufen und somit auch die Festkörper 10₄, 10₃, 10₂ und 10₁ in dieser Reihenfolge nochmals gepumpt werden.

Damit ist bereits aufgrund des ersten Pumpstrahlungsdurchlaufs die Möglichkeit geschaffen, vier Festkörper 10₁ bis 10₄ mit jeweils vier Durchgängen des Pumpstrahlungsfeldes zu pumpen.

Um bei vier Festkörpern 10₁ bis 10₄ eine möglichst gleich große Pumpleistungsdichte in jedem der Festkörper 10₁ bis 10₄ für das laseraktive Medium zur Verfügung zu haben, wird erfindungsgemäß ein zweiter Pumpstrahlungsdurchlauf erzeugt, welcher ausgehend von einem ankommenden kollimierten Pumpstrahlungsfeldes 142 über eine Fokussierungsoptik 140 durch ein Pumpstrahlungsfeld gebildet ist, welches einen ausgehend von der Fokussierungsoptik 140 einfallenden Ast 132₁ bildet, der in den Festkörper 10₄ eintritt und von dessen Reflektor 16₄ in den ausfallenden Ast 134₁ reflektiert wird. Dieser wird mittels einer Refokussierungsoptik 150₁ reflektiert in einen einfallenden Ast 132₂, welcher in den Festkörper 10₃ einfällt, von dessen Reflektor 16₃ in Form eines ausfallenden Astes 134₂ reflektiert wird und auf eine Refokussierungsoptik 150₂ trifft, die wiederum diesen in einen einfallenden Ast 132₃ abbildet, welcher in den Festkörper 10₂ einfällt, von dessen Reflektor 16₂ reflektiert wird und als ausfallender Ast 134₃ auf eine Refokussierungsoptik 150₃ trifft, welche einen einfallenden Ast 132₄ bildet, der in den Festkörper 10₁ einfällt, von dessen Reflektor 16₁ reflektiert wird und als ausfallender Ast 134₄ auf eine Refokussierungsoptik 150₄ trifft, die beispielsweise ebenfalls als den Lichtweg umkehrender Spiegel ausgebildet ist.

Somit umfaßt der zweite Pumpstrahlungsdurchlauf analog dem ersten die Pumpzweige 138₁, 138₂, 138₃ und 138₄, die jedoch in ihrer Reihenfolge auf die Festkörper 10₁ bis 10₄ mit umgekehrter Reihenfolge wie beim die Pumpzweige 38₁ bis 38₄ auftreffen, so daß durch den zweiten Pumpstrahlungsdurchlauf der Festkörper 10₄ am stärksten gepumpt wird und sukzessive die absorbierte Pumpleistung bis zum Festkörper 10₁ abnimmt, während durch den ersten Pumpstrahlungsdurchlauf der erste Festkörper 10₁ am stärksten gepumpt wird und die absorbierte Pumpleistung bis zum Festkörper 10₄ sukzessive abnimmt.

Ferner liegen die Pumpzweige 138₁ bis 138₄ in Ebenen 136₁ bis 136₄, welche mit den Ebenen 36₁ bis 36₄ jeweils im Bereich des jeweiligen Festkörpers 10₁ bis 10₄ nicht zusammenfallen, vorzugsweise im Winkel zueinander verlaufen, so daß jeder der Festkörper 10₁ bis 10₄ von zwei in unterschiedlichen Ebenen liegenden Pumpzweigen, nämlich einem ersten Pumpzweig 38 und einem zweiten Pumpzweig 138 durchsetzt ist, und aufgrund dieser der im Winkel zueinander verlaufenden Ebenen 36 bzw. 136 in zwei unterschiedlichen Richtungen durch reflektiertes Pumpstrahlungsfeld gepumpt ist, wobei vorzugsweise die Ebenen 36 und 136 im Bereich des jeweiligen Festkörpers 10 quer, noch besser im Winkel von größenordnungsmäßig 90° zueinander verlaufen, um eine bezüglich eines Schnittpunktes S der Ebenen 36, 136 möglichst symmetrische Verteilung des Pumpstrahlungsfeldes im jeweiligen Festkörper 10₁ bis 10₄ zu erreichen.

Besonders kompakt läßt sich das erfindungsgemäße Laserverstärkersystem dann aufbauen, wenn die Reflektoren 16₁ bis 16₄ Reflexionsflächen 17₁ bis 17₄ aufweisen, die sich in einer gemeinsamen Ebene erstrecken und wenn durch die Linie 12 hindurch eine Symmetrieebene 13 verläuft, welche senkrecht auf den Reflektorflächen 17₁ bis 17₄ steht und dabei die Refokussierungsoptiken 50₁ bis 50₄ sowie 150₁ bis 150₄ beiderseits der Ebene 13 angeordnet sind. In Längsrichtung der Linie 12 wechseln vorzugsweise paarweise einander gegenüberliegende Refokussierungsoptiken, beispielsweise die Refokussierungsoptiken 50₁ und 150₃, 150₂ und 50₂ sowie 50₃ und 150₁ mit Festkörpern 10 ab, das heißt, auf den Festkörper 10₁ folgt längs der Linie 12 betrachtet das Paar von Refokussierungsoptiken 50₁ und 150₃, dann folgt der Festkörper 10₂, dann das Paar von Refokussierungsoptiken 150₂ und 50₂, dann der Festkörper 10₃, dann das Paar von Refokussierungsoptiken 50₃ und 150₁ und schließlich der Festkörper 10₄.

Vorzugsweise sind bei der erfindungsgemäßen Lösung auch die Schnittlinien der Ebenen 36 und 136 so gelegt, daß sie möglichst zentrisch zu den Festkörpern 10₁ bis 10₄ liegen und vorzugsweise verläuft die Linie 12, längs welcher die Festkörper 10₁ bis 10₅ angeordnet sind, durch die Schnittlinien S der jeweiligen Ebenen 36 und 136 in den jeweiligen Festkörpern 10₁ bis 10₄.

Bei dem ersten in Fig. 1 und 2 dargestellten Ausführungsbeispiel sind zur Erzeugung der beiden Pumpstrahlungsfelder 30 und 130 beispielsweise zwei verschiedene Pumpstrahlungsquellen vorgesehen. Es besteht aber auch die Möglichkeit, das Pumpstrahlungsfeld einer Pumpstrahlungsquelle aufzuteilen und über Lichtleiter den jeweiligen Fokussierungsoptiken 40 und 140 zuzuführen.

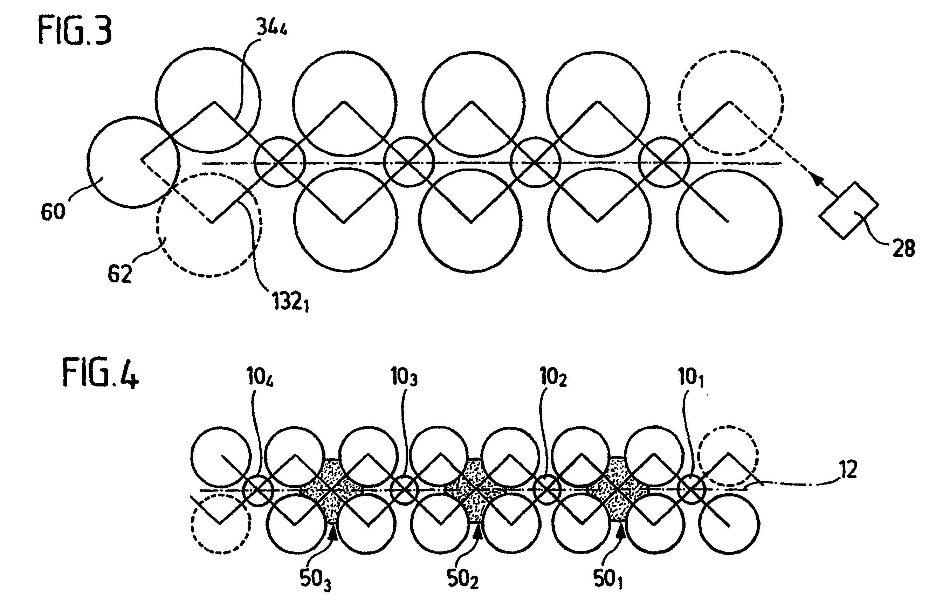

Bei einem zweiten Ausführungsbeispiel, dargestellt in Fig. 3 ist die Refokussierungsoptik 50₄ nicht so ausgebildet, daß sie den ausfallenden Ast 34₄ in sich zurückreflektiert, sondern den ausfallenden Ast 34₄ auf einen Umlenkspiegel 60 umlenkt, welcher diesen wiederum auf eine Refokussierungsoptik 62 abbildet, die die Fokussierungsoptik 140 ersetzt und wiederum den einfallenden Ast 132₁ bildet, welcher damit letztlich das aus dem ausfallenden Ast 34₄ durch Umlenken mittels der Umlenkoptik 60 und der Refokussierungsoptik 62 gebildet ist.

Im übrigen ist das zweite Ausführungsbeispiel mit dem ersten identisch, so daß auf die Ausführung hierzu vollinhaltlich Bezug genommen werden kann.

Bei diesem Ausführungsbeispiel haben allerdings die zweiten Pumpzweige 138₁ bis 138₄ jeweils eine geringere Intensität als die ersten Pumpzweige 38₁ bis 38₄, da die Anfangsintensität des einfallenden Astes bei dem zweiten Pumpstrahlungsdurchlauf mit den Pumpzweigen 138₁ bis 138₄ der Ausgangsintensität des ausfallenden Astes 34₄ des ersten Pumplichtdurchlaufs mit den Pumpzweigen 38₁ bis 38₄ entspricht.

Dennoch kann bei dem zweiten Ausführungsbeispiel gemäß Fig. 3 ein Pumpen jedes der Festkörper 10₁ bis 10₄ in den zwei quer zueinander verlaufenden Ebenen 36 und 136 erfolgen.

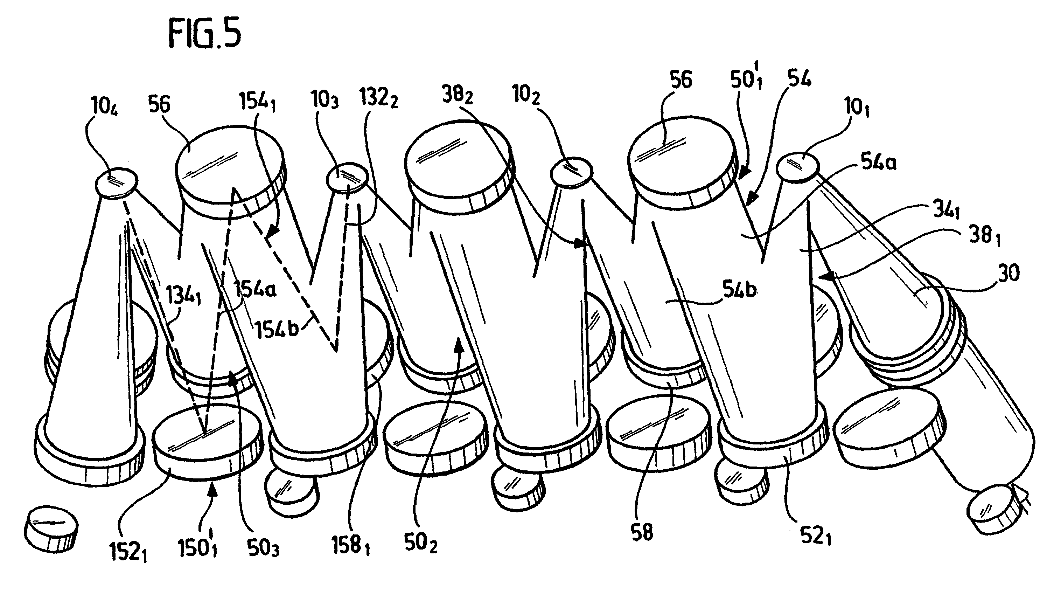

Bei einem dritten Ausführungsbeispiel eines erfindungsgemäßen Laserverstärkersystems, dargestellt in den Figuren 4 bis 6, sind die Festkörper 10₁ bis 10₄ ebenfalls längs der Linie 12 angeordnet.

Im Gegensatz zum ersten Ausführungsbeispiel und zum zweiten Ausführungsbeispiel umfaßt jede der Refokussierungsoptiken 50₁ bis 50₃ nicht nur keinen Hohlspiegel, welcher den ausfallenden Ast 34₁ des ersten Pumpzweiges 38₁ auf den einfallenden Ast 32₂ des zweiten Pumpzweiges 38₂ abbildet, sondern ein kollimierendes Element 52₁, welches den ausfallenden Ast 34₁ in einen ersten Teilast 54a eines kollimierten Astes 54 abbildet, eine Umlenkoptik 56, welche den ersten kollimierten Teilast 54a in einen zweiten kollimierten Teilast 54b abbildet und eine Fokussierungsoptik 58, welche den zweiten kollimierten Teilast 54b in den einfallenden Ast 32₂ abbildet.

In gleicher Weise sind die Refokussierungsoptiken 50₂ und 50₃ ausgebildet.

Dabei wird in gleicher Weise wie beim ersten Ausführungsbeispiel das Prinzip beibehalten, daß die jeweiligen Festkörper 10₁ bis 10₄ vom ersten Pumpzweig 38₁ bis 38₄ des ersten Pumpstrahlungsdurchlaufs des Pumpstrahlungsfeldes 30 durchsetzt sind.

Auch die Refokussierungsoptiken 150₁ bis 150₃ kollimieren den ausfallenden Ast 134₁ mittels eines kollimierenden Elements 152₁, welches einen Teilast 154a eines kollimierten Astes 154₁ bildet, der über das Umlenkelement 56 in den zweiten Teilast 154 jedes kollimierten Astes 154₁ abgebildet wird und auf das fokussierende Element 158₁ tritt, welches den zweiten Teilast 154b in den einfallenden Ast 132₂ abbildet, der in den Festkörper 10₃ einfällt.

In gleicher Weise sind die übrigen Refokussierungsoptiken 150₂ und 150₃ ausgebildet.

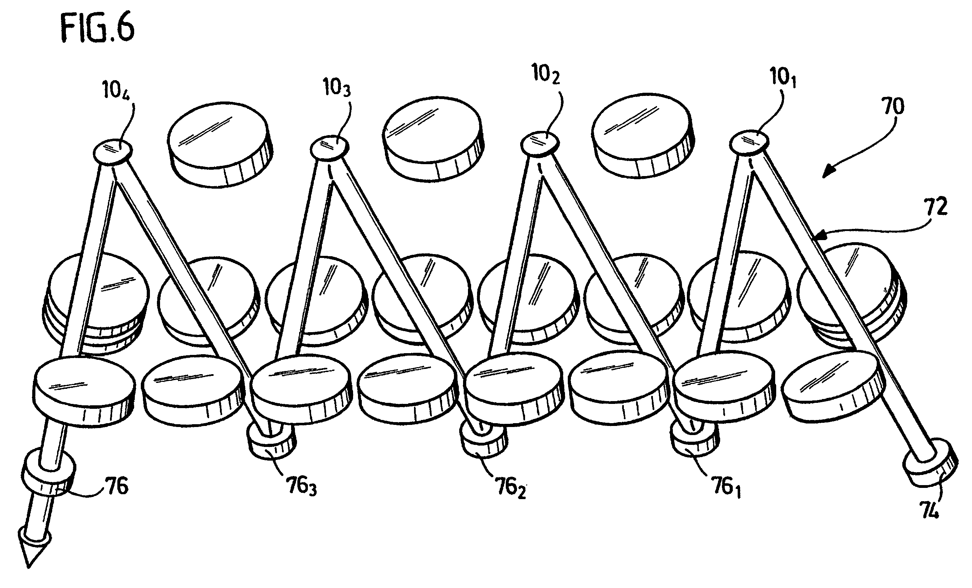

Ferner ist bei dem dritten Ausführungsbeispiel, wie in Fig. 6 dargestellt, ein als Ganzes mit 70 bezeichneter Resonator vorgesehen, dessen Resonatorstrahlungsfeld 72 alle Festkörper 10₁ bis 10₄ durchsetzt. Der Resonator 70 weist zur Ausbildung des Resonatorstrahlungsfeldes 72 zwei Endspiegel 74 und 76 auf, und zusätzlich zwischen den Festkörpern 10₁ bis 10₄ angeordnete Umlenkspiegel 76₁ bis 76₃, während außerdem die den einzelnen Festkörpern 10₁ bis 10₄ zugeordneten Reflektoren 16₁ bis 16₄ gleichzeitig ebenfalls noch als Umlenkspiegel des Resonators 70 wirksam sind und auch das Resonatorstrahlungsfeld 72 reflektieren, so daß dieses beispielsweise von dem Endspiegel 74 zum Reflektor 16₁, von diesem zum Umlenkspiegel 76₁, von diesem zum Reflektor 16₂, von diesem zum Umlenkspiegel 76₂, von diesem zum Reflektor 16₃, von diesem zum Umlenkspiegel 76₃ und von diesem zum Reflektor 16₄ und dann zum Endspiegel 76 verläuft.

Der Resonator für das Resonatorstrahlungsfeld braucht jedoch nicht zwingenderweise, wie in Fig. 6 dargestellt, so konzipiert sein, daß er alle Festkörper umfaßt. Es ist ebenfalls denkbar, jedem Festkörper einen eigenen Resonator zuzuordnen und dann die aus den jeweiligen Resonatoren austretenden Laserstrahlungsfelder entweder einzeln für einzelne Aufgaben zu verwenden oder zu überlagern.

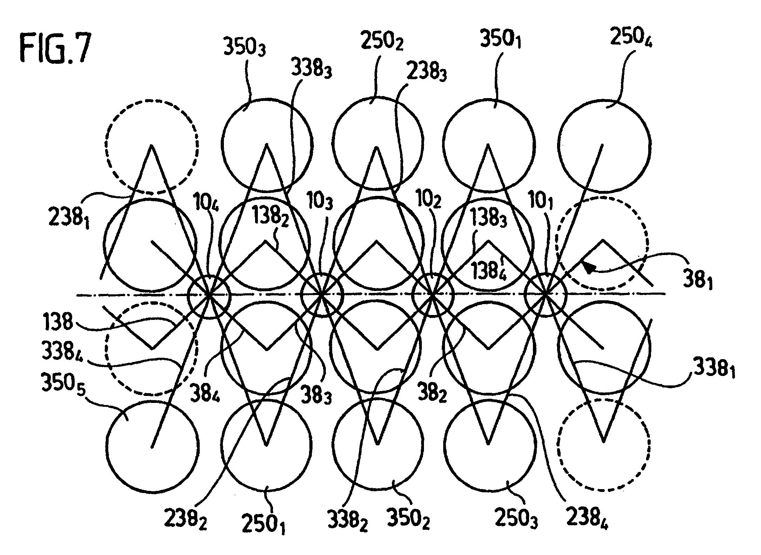

Ein viertes Ausführungsbeispiel eines erfindungsgemäßen Laserverstärkersystems, lediglich schematisch dargestellt in Fig. 7, basiert auf dem ersten Ausführungsbeispiel, wobei allerdings die einzelnen Festkörper 10₁ bis 10₄ nicht nur von dem ersten Pumpstrahlungsdurchlauf mit den ersten Pumpzweigen 38₁, 38₂, 38₃ und 38₄ durchsetzt ist und zusätzlich mit den Pumpzweigen 138₁, 138₂, 138₃ und 138₄ des zweiten Pumpstrahlungsdurchlaufs, sondern zusätzlich noch ein dritter Pumpstrahlungsdurchlauf und ein vierter Pumpstrahlungsdurchlauf vorgesehen sind, wobei der vierte Pumpstrahlungsdurchlauf durch zusätzliche Refokussierungsoptiken 250₁, 250₂, 250₃ und 250₄ gebildet ist, zwischen denen die dritten Pumpzweige 238₁, 238₂, 238₃ und 238₄ sich erstrecken. Auch zum vierten Pumpstrahlungsdurchlauf sind Refokussierungsoptiken 350₁, 350₂, 350₃, 350₄ vorgesehen, die die Pumpzweige 338₁, 338₂, 338₃ und 338₄ ineinander abbilden. Im übrigen ist vom Prinzip her das vierte Ausführungsbeispiel in gleicher Weise aufgebaut und arbeitet in gleicher Weise wie das erste Ausführungsbeispiel, so daß die gesamten Ausführungen zum ersten Ausführungsbeispiel hinsichtlich der Ebenen, in welchen die Pumpzweige 38, 138, 238 und 338 liegen, auch für das dritte Ausführungsbeispiel gelten.

Der Vorteil des vierten Ausführungsbeispiels ist der, daß die Möglichkeit geschafften ist, den jeweiligen Festkörper 10₁ bis 10₄ noch gleichmäßiger mit dem Pumpstrahlungsfeld zu pumpen.

## Patentansprüche

1. Laserverstärkersystem umfassend mehrere ein laseraktives Medium aufweisende Festkörpervolumina,
eine Pumpstrahlungsquelle zur Erzeugung eines Pumpstrahlungsfeldes zum optischen Pumpen des laseraktiven Mediums,
einen jedem Festkörpervolumen zugeordneten Pumpstrahlungsreflektor, der einen in das Festkörpervolumen einfallenden Ast des Pumpstrahlungsfeldes als ausfallenden Ast durch das Festkörpervolumen erneut so hindurchtreten läßt, daß der einfallende Ast und der ausfallende Ast in einer ersten Ebene liegend einen Winkel miteinander einschließen und einen ersten Pumpzweig bilden,
einen ersten Pumpstrahlungsdurchlauf durch die Festkörpervolumina, in welchem die ersten Pumpzweige so aufeinanderfolgend angeordnet sind, daß die mehreren Festkörpervolumina vom Pumpstrahlungsfeld in einer ersten Sequenz durchlaufen werden,
einem zweiten Pumpzweig (138) der jedes Festkörpervolumen durchsetzt,
**dadurch gekennzeichnet, daß** der einfallende Ast (132) und der ausfallende Ast (134) des zweiten jedes Festkörpervolumen durchsetzenden Pumpzweigs (138) in einer zweiten von der ersten Ebene (36) verschiedenen Ebene (136) liegen und in dieser einen Winkel einschließen, daß ein zweiter Pumpstrahlungsdurchlauf (138₁ bis 138₄) vorgesehen ist in welchem die zweiten Pumpzweige (138) der mehreren Festkörpervolumina (10) so aufeinander folgend angeordnet sind, daß die Festkörpervolumina (10) vom Pumpstrahlungsfeld in einer zweiten Sequenz durchlaufen werden.

2. Laserverstärkersystem nach Anspruch 1, **dadurch gekennzeichnet, daß** in der zweiten Sequenz die Reihenfolge der Festkörpervolumina (10) bezogen auf die erste Sequenz geändert ist.

3. Laserverstärkersystem nach Anspruch 1 oder 2, **dadurch gekennzeichnet, daß** jeder der Pumpstrahlungsdurchläufe (38₁ bis 38₄; 138₁ bis 138₄) von einer eigenen Pumpstrahlungsquelle (28, 128) gespeist ist.

4. Laserverstärkersystem nach Anspruch 1 oder 2, **dadurch gekennzeichnet, daß** die Pumpstrahlungsdurchläufe (38₁ bis 38₄; 138₁ bis 138₄) von einer einzigen Pumpstrahlungsquelle (28) gespeist sind.

5. Laserverstärkersystem nach Anspruch 4, **dadurch gekennzeichnet, daß** die Pumpstrahlungsdurchläufe (38₁ bis 38₄; 138₁ bis 138₄) durch eine Umlenkoptik (60) miteinander gekoppelt sind.

6. Laserverstärkersystem nach einem der voranstehenden Ansprüche, **dadurch gekennzeichnet, daß** das Pumpstrahlungsfeld jeden Pumpstrahlungsdurchlauf (38₁ bis 38₄; 138₁ bis 138₄) in zwei entgegengesetzten Richtungen durchläuft.

7. Laserverstärkersystem nach Anspruch 6, **dadurch gekennzeichnet, daß** an einem Ende jedes Pumpstrahlungsdurchlaufs ein Reflektor (50₄, 150₄) zugeordnet ist, der das Pumpstrahlungsfeld zurückreflektiert.

8. Laserverstärkersystem nach einem der voranstehenden Ansprüchen, **dadurch gekennzeichnet, daß** in der zweiten Sequenz die Reihenfolge der Festkörpervolumina (10) bezogen auf die erste Sequenz umgekehrt ist.

9. Laserverstärkersystem nach einem der voranstehenden Ansprüche, **dadurch gekennzeichnet, daß** mindestens ein weiterer Pumpstrahlungsdurchlauf (238₁ bis 238₄; 338₁ bis 338₄) vorgesehen ist, bei welchem das Pumpstrahlungsfeld (230, 330) die Festkörpervolumina (10) in Form mindestens einer weiteren Sequenz (238₁ bis 238₄; 338₁ bis 338₄) durchläuft.

10. Laserverstärkersystem nach Anspruch 9, **dadurch gekennzeichnet, daß** die mindestens eine weitere Sequenz (238₁ bis 238₄; 338₁ bis 338₄) so verläuft, daß diese unterschiedlichen Pumpanregungen des laseraktiven Materials im Festkörpervolumina (10) durch die erste und die zweite Sequenz entgegenwirkt.

11. Laserverstärkersystem nach einem der voranstehenden Ansprüche, **dadurch gekennzeichnet, daß** die einzelnen Pumpzweige (38₁ bis 38₄; 138₁ bis 138₄) eines Pumpstrahlungsdurchlaufs durch Refokussierungsoptiken (50, 150) gekoppelt sind.

12. Laserverstärkersystem nach Anspruch 11, **dadurch gekennzeichnet, daß** die Refokussierungsoptiken (50, 150) den ausfallenden Ast (34, 134) eines Pumpzweiges direkt in den entsprechenden der einfallenden Äste (32, 132) des nächsten Pumpzweiges umformen.

13. Laserverstärkersystem nach Anspruch 11, **dadurch gekennzeichnet, daß** mindestens eine der Refokussierungsoptiken (50', 150') als zwischenkollimierende Refokussierungsoptik (50', 150') ausgebildet ist und jeweils den ausfallenden Äste (34) über einen zwischenkollimierten Ast (54, 154) in den entsprechenden einfallenden Ast (32) umformen.

14. Laserverstärkersystem nach Anspruch 13, **dadurch gekennzeichnet, daß** die zwischenkollimierenden Refokussierungsoptiken 50', 150') einen gefalteten kollimierten Ast (54, 154) aufweisen.

15. Laserverstärkersystem nach Anspruch 14, **dadurch gekennzeichnet, daß** die zwischenkollimierenden Refokussierungsoptiken (50', 150') ein Umlenkelement (56) zur Faltung des zwischenkollimierten Astes (54, 154) aufweisen.

16. Laserverstärkersystem nach Anspruch 15, **dadurch gekennzeichnet, daß** jeweils eine der Refokussierungsoptiken (50', 150') des ersten und eine des zweiten Pumpstrahlungsdurchlaufs den jeweiligen zwischenkollimierten Ast auf ein gemeinsames Umlenkelement (56) abbilden.

17. Laserverstärkersystem nach einem der Ansprüche 13 bis 16, **dadurch gekennzeichnet, daß** die zwischenkollimierenden Refokussierungsoptiken (50', 150') ein kollimierendes Element (52, 152) aufweisen, welches den jeweils ausfallenden Ast (34, 134) in den zwischenkollimierten Ast (54, 154) umformt.

18. Laserverstärkersystem nach einem der Ansprüche 13 bis 16, **dadurch gekennzeichnet, daß** die zwischenkollimierenden Refokussierungsoptiken (50', 150') ein fokussierendes Element (58, 158) aufweisen, welches den zwischenkollimierten Ast (54, 154) in den jeweils einfallenden Ast (34, 134) abbilden.

19. Laserverstärkersystem nach einem der voranstehenden Ansprüche 10 bis 17, **dadurch gekennzeichnet, daß** die Refokussierungsoptiken (50, 150) Hohlspiegel umfassen.

20. Laserverstärkersystem nach Anspruch 19, **dadurch gekennzeichnet, daß** die Hohlspiegel als nichtsphärische Spiegel ausgebildet sind.

21. Laserverstärkersystem nach Anspruch 20, **dadurch gekennzeichnet, daß** die Hohlspiegel als elliptische Spiegel ausgebildet sind.

22. Laserverstärkersystem nach Anspruch 20, **dadurch gekennzeichnet, daß** die Hohlspiegel als parabolische Spiegel ausgebildet sind.

23. Laserverstärkersystem nach Anspruch 20, **dadurch gekennzeichnet, daß** die Hohlspiegel als torische Spiegel ausgebildet sind.

24. Laserverstärkersystem nach einem der voranstehenden Ansprüche, **dadurch gekennzeichnet, daß** die Festkörpervolumina (10) längs einer Linie (12) angeordnet sind.

25. Laserverstärkersystem nach einem der voranstehenden Ansprüche, **dadurch gekennzeichnet, daß** alle Reflexionsflächen (17) der den Festkörpervolumina (10) zugeordneten Reflektoren (16) in einer gemeinsamen Ebene liegen.

26. Laserverstärkersystem nach Anspruch 25, **dadurch gekennzeichnet, daß** die Refokussierungselemente (50, 150) auf unterschiedlichen Seiten einer senkrecht auf den Reflexionsflächen (17) stehenden und durch die Linie (12) hindurchverlaufenden Fläche (13) liegen.

27. Laserverstärkersystem nach einem der voranstehenden Ansprüche, **dadurch gekennzeichnet, daß** sich die Ebenen (36, 136) in welchem die ersten und zweiten Pumpzweige (38, 138) liegen in einem Winkel kleiner gleich 90° schneiden.

28. Laserverstärkersystem nach einem der voranstehenden Ansprüche, **dadurch gekennzeichnet, daß** die Ebenen (36, 136) in welchem die ersten und zweiten Pumpzweige (38, 138) liegen, quer zueinander verlaufen.

29. Laserverstärkersystem nach einem der voranstehenden Ansprüche, **dadurch gekennzeichnet, daß** jedes laseraktives Medium aufweisende Festkörpervolumen in einen eigenen Festkörper angeordnet ist.

## Claims

1. Laser amplification system comprising several solid-state volumes having a laser-active medium,
a pumping radiation source for generating a pumping radiation field for the optical pumping of the laser-active medium,
a pumping radiation reflector associated with each solid-state volume, said reflector allowing a leg of the pumping radiation field entering the solid-state volume to pass through the solid-state volume again as an outgoing leg such that the incoming leg and the outgoing leg include an angle with one another located in a first plane and form a first pumping branch,
a first pumping radiation path through the solid-state volumes, the first pumping branches being arranged in said path so as to follow one another such that the pumping radiation field passes through the several solid-state volumes in a first sequence,
a second pumping branch (138) penetrating each solid-state volume, **characterized in that**
the incoming leg (132) and the outgoing leg (134) of the second pumping branch (138) penetrating each solid-state volume lie in a second plane (136) different from the first plane (36) and include an angle therein, **in that** a second pumping radiation path (138₁ to 138₄) is provided, the second pumping branches (138) of the several solid-state volumes (10) being arranged in said second pumping radiation path so as to follow one another such that the pumping radiation field passes through the solid-state volumes (10) in a second sequence.

2. Laser amplification system as defined in claim 1, **characterized in that** in the second sequence the order of the solid-state volumes (10) is changed in relation to the first sequence.

3. Laser amplification system as defined in claim 1 or 2, **characterized in that** each of the pumping radiation paths (38₁ to 38₄; 138₁ to 138₄) is supplied by its own pumping radiation source (28, 128).

4. Laser amplification system as defined in claim 1 or 2, **characterized in that** the pumping radiation paths (38₁ to 38₄; 138₁ to 138₄) are supplied by a single pumping radiation source (28).

5. Laser amplification system as defined in claim 4, **characterized in that** the pumping radiation paths (38₁ to 38₄; 138₁ to 138₄) are coupled to one another by an optical deflection means (60).

6. Laser amplification system as defined in any one of the preceding claims, **characterized in that** the pumping radiation field passes through each pumping radiation path (38₁ to 38₄; 138₁ to 138₄) in two opposite directions.

7. Laser amplification system as defined in claim 6, **characterized in that** a reflector (50₄, 150₄) is associated at one end of each pumping radiation path for reflecting back the pumping radiation field.

8. Laser amplification system as defined in any one of the preceding claims, **characterized in that** in the second sequence the order of the solid-state volumes (10) is reversed in relation to the first sequence.

9. Laser amplification system as defined in any one of the preceding claims, **characterized in that** at least one further pumping radiation path (238₁ to 238₄; 338₁ to 338₄) is provided, the pumping radiation field (230, 330) passing through the solid-state volumes (10) with said path in the form of at least one further sequence (238₁ to 238₄; 338₁ to 338₄).

10. Laser amplification system as defined in claim 9, **characterized in that** the at least one further sequence (238₁ to 238₄; 338₁ to 338₄) runs in a manner that counteracts varying pumping excitations of the laser-active material in the solid-state volume (10) as a result of the first and second sequences.

11. Laser amplification system as defined in any one of the preceding claims, **characterized in that** the individual pumping branches (38₁ to 38₄; 138₁ to 138₄) of a pumping radiation path are coupled by optical refocusing means (50, 510).

12. Laser amplification system as defined in claim 11, **characterized in that** the optical refocusing means (50, 150) reshape the outgoing leg (34, 134) of a pumping branch directly into the corresponding one of the incoming legs (32, 132) of the next pumping branch.

13. Laser radiation system as defined in claim 11, **characterized in that** at least one of the optical refocusing means (50', 150') is designed as an intermediately collimating optical refocusing means (50', 150') and reshapes the respective outgoing leg (34) via an intermediately collimated leg (54, 154) into the corresponding incoming leg (32).

14. Laser amplification system as defined in claim 13, **characterized in that** the intermediately collimating optical refocusing means (50', 150') have a folded, collimated leg (54, 154).

15. Laser amplification system as defined in claim 14, **characterized in that** the intermediately collimating optical refocusing means (50', 150') have a deflection element (56) for folding the intermediately collimated leg (54, 154).

16. Laser amplification system as defined in claim 15, **characterized in that** one of the optical refocusing means (50', 150') of the first pumping radiation path and one of the second pumping radiation path each image the respective intermediately collimated leg onto a common deflection element (56).

17. Laser amplification system as defined in any one of claims 13 to 16, **characterized in that** the intermediately collimating optical refocusing means (50', 150') have a collimating element (52, 152) reshaping the respectively outgoing leg (34, 134) into the intermediately collimated leg (54, 154).

18. Laser amplification system as defined in any one of claims 13 to 16, **characterized in that** the intermediately collimating optical refocusing means (50', 150') have a focusing element (58, 158) imaging the intermediately collimated leg (54, 154) into the respectively incoming leg (34, 134).

19. Laser amplification system as defined in any one of the preceding claims 10 to 17, **characterized in that** the optical refocusing means (50, 150) comprise concave mirrors.

20. Laser amplification system as defined in claim 19, **characterized in that** the concave mirrors are designed as non-spherical mirrors.

21. Laser amplification system as defined in claim 20, **characterized in that** the concave mirrors are designed as elliptical mirrors.

22. Laser amplification system as defined in claim 20, **characterized in that** the concave mirrors are designed as parabolic mirrors.

23. Laser amplification system as defined in claim 20, **characterized in that** the concave mirrors are designed as toric mirrors.

24. Laser amplification system as defined in any one of the preceding claims, **characterized in that** the solid-state volumes (10) are arranged along a line (12).

25. Laser amplification system as defined in any one of the preceding claims, **characterized in that** all the reflection surfaces (17) of the reflectors (16) associated with the solid-state volumes (10) are located in a common plane.

26. Laser amplification system as defined in claim 25, **characterized in that** the refocusing elements (50, 150) are located on different sides of a surface (13) extending at right angles to the reflection surfaces (17) and passing through the line (12).

27. Laser amplification system as defined in any one of the preceding claims, **characterized in that** the planes (36, 136) where the first and second pumping branches (38, 138) are located intersect at an angle of less than or equal to 90°.

28. Laser amplification system as defined in any one of the preceding claims, **characterized in that** the planes (36, 136) where the first and second pumping branches (38, 138) are located extend transversely to one another.

29. Laser amplification system as defined in any one of the preceding claims, **characterized in that** each solid-state volume having laser-active medium is arranged in its own solid-state body.

## Revendications

1. Système d'amplification laser comprenant plusieurs volumes de corps solide présentant un agent laser actif, une source de rayonnement de pompage destinée à engendrer un champ de rayonnement de pompage pour le pompage optique de l'agent laser actif,
un réflecteur de rayonnement de pompage associé à chaque volume de corps solide, qui laisse à nouveau retraverser le volume de corps solide à une branche de champ de rayonnement de pompage incidente dans le volume de corps solide, en tant que branche émergente, de façon telle, que la branche incidente et la branche émergente, situées dans un premier plan, forment entre elles un angle et une première section de pompage,
un premier passage de rayonnement de pompage à travers les volumes de corps solide, dans lequel les premières sections de pompage sont agencées les unes succédant aux autres de façon telle que les plusieurs volumes de corps solide soient traversés par le champ de rayonnement de pompage dans une première séquence,
une seconde section de pompage (138) qui traverse chaque volume de corps solide,
**caractérisé en ce que** la branche incidente (132) et la branche émergente (134) de la seconde section de pompage (138) traversant chaque volume de corps solide, se situent dans un second plan (136) différent du premier plan (36) et y forment entre-elles un angle, et **en ce qu'**il est prévu un second passage de rayonnement de pompage (138₁ à 138₄) dans lequel les secondes sections de pompage (138) desdits plusieurs volumes de corps solide (10) sont agencées les unes succédant aux autres de façon telle que les volumes de corps solide (10) soient traversés par le champ de rayonnement de pompage dans une seconde séquence.

2. Système d'amplification laser selon la revendication 1, **caractérisé en ce que** dans la seconde séquence, la succession des volumes de corps solide (10) est modifiée par rapport à la première séquence.

3. Système d'amplification laser selon la revendication 1 ou 2, **caractérisé en ce que** chacun des passages de rayonnement de pompage (38₁ à 38₄ ; 138₁ à 138₄) est alimenté par sa propre source de rayonnement de pompage (28, 128).

4. Système d'amplification laser selon la revendication 1 ou 2, **caractérisé en ce que** les passages de rayonnement de pompage (38₁ à 38₄ ; 138₁ à 138₄) sont alimentés par une seule source de rayonnement de pompage (28).

5. Système d'amplification laser selon la revendication 4, **caractérisé en ce que** les passages de rayonnement de pompage (38₁ à 38₄ ; 138₁ à 138₄) sont couplés mutuellement par une optique de déviation (60).

6. Système d'amplification laser selon l'une des revendications précédentes, **caractérisé en ce que** le champ de rayonnement de pompage traverse chaque passage de rayonnement de pompage (38₁ à 38₄ ; 138₁ à 138₄) selon deux directions opposées.

7. Système d'amplification laser selon la revendication 6, **caractérisé en ce qu'**à une extrémité de chaque passage de rayonnement de pompage est associé un réflecteur (50₄, 150₄) qui réfléchit en retour le champ de rayonnement de pompage.

8. Système d'amplification laser selon l'une des revendications précédentes, **caractérisé en ce que** dans la seconde séquence, la succession des volumes de corps solide (10) est inversée par rapport à la première séquence.

9. Système d'amplification laser selon l'une des revendications précédentes, **caractérisé en ce qu'**il est prévu au moins un passage de rayonnement de pompage supplémentaire (238₁ à 238₄ ; 338₁ à 338₄) dans lequel le champ de rayonnement de pompage (230, 330) traverse les volumes de corps solide (10) sous la forme d'au moins une séquence supplémentaire (238₁ à 238₄ ; 338₁ à 338₄).

10. Système d'amplification laser selon la revendication 9, **caractérisé en ce que** ladite au moins une séquence supplémentaire (238₁ à 238₄ ; 338₁ à 338₄) se déroule de façon telle, que celle-ci agisse à l'encontre d'excitations de pompage, différentes, du matériau laser actif dans le volume de corps solide (10) par la première et la seconde séquence.

11. Système d'amplification laser selon l'une des revendications précédentes, **caractérisé en ce que** les sections de pompage individuelles (38₁ à 38₄ ; 138₁ à 138₄) d'un passage de rayonnement de pompage sont couplées par des optiques de refocalisation (50, 150).

12. Système d'amplification laser selon la revendication 11, **caractérisé en ce que** les optiques de refocalisation (50, 150) transforment la branche émergente (34, 134) d'une section de pompage directement en celle correspondante des branches incidentes (32, 132) de la prochaine section de pompage.

13. Système d'amplification laser selon la revendication 11, **caractérisé en ce que** l'une au moins des optiques de refocalisation (50', 150') est réalisée en tant qu'optique de refocalisation collimatrice intermédiaire (50', 150'), chacune de celles-ci transformant la branche émergente (34) en la branche incidente (32) correspondante moyennant une branche de collimation intermédiaire (54, 154).

14. Système d'amplification laser selon la revendication 13, **caractérisé en ce que** les optiques de refocalisation collimatrices intermédiaires (50', 150') présentent une branche de collimation coudée (54, 154).

15. Système d'amplification laser selon la revendication 14, **caractérisé en ce que** les optiques de refocalisation collimatrices intermédiaires (50', 150') présentent un élément de déviation (56) pour couder la branche de collimation intermédiaire(54, 154).

16. Système d'amplification laser selon la revendication 15, **caractérisé en ce que** l'une des optiques de refocalisation (50', 150') du premier passage de rayonnement de pompage et respectivement l'une du second passage de rayonnement de pompage reproduisent la branche de collimation intermédiaire respective sur un élément de déviation commun.

17. Système d'amplification laser selon l'une des revendications 13 à 16, **caractérisé en ce que** les optiques de refocalisation collimatrices intermédiaires (50', 150') présentent un élément collimateur (52, 152) qui transforme la branche émergente (34, 134) respective en la branche de collimation intermédiaire (54, 154).

18. Système d'amplification laser selon l'une des revendications 13 à 16, **caractérisé en ce que** les optiques de refocalisation collimatrices intermédiaires (50', 150') présentent un élément de focalisation (58, 158) qui reproduit la branche de collimation intermédiaire (54, 154) en la branche incidente (34, 134) respective.

19. Système d'amplification laser selon l'une des revendications précédentes, **caractérisé en ce que** les optiques de refocalisation (50, 150) comprennent des miroirs concaves.

20. Système d'amplification laser selon la revendication 19, **caractérisé en ce que** les miroirs concaves sont réalisés en tant que miroirs non sphériques.

21. Système d'amplification laser selon la revendication 20, **caractérisé en ce que** les miroirs concaves sont réalisés en tant que miroirs elliptiques.

22. Système d'amplification laser selon la revendication 20, **caractérisé en ce que** les miroirs concaves sont réalisés en tant que miroirs paraboliques.

23. Système d'amplification laser selon la revendication 20, **caractérisé en ce que** les miroirs concaves sont réalisés en tant que miroirs toriques.

24. Système d'amplification laser selon l'une des revendications précédentes, **caractérisé en ce que** les volumes de corps solide (10) sont disposés le long d'une ligne (12).

25. Système d'amplification laser selon l'une des revendications précédentes, **caractérisé en ce que** toutes les surfaces de réflexion (17) des réflecteurs (16) associés aux volumes de corps solide (10), se situent dans un plan commun.

26. Système d'amplification laser selon la revendication 25, **caractérisé en ce que** les éléments de refocalisation (50, 150) se situent sur des côtés différents d'une surface (13) perpendiculaire aux surfaces de réflexion (17) et passant par la ligne (12).

27. Système d'amplification laser selon l'une des revendications précédentes, **caractérisé en ce que** les plans (36, 136) dans lesquels se situent les premières et les secondes sections de pompage (38, 138) se coupent selon un angle inférieur ou égal à 90°.

28. Système d'amplification laser selon l'une des revendications précédentes, **caractérisé en ce que** les plans (36, 136) dans lesquels se situent les premières et les secondes sections de pompage (38, 138) s'étendent transversalement l'un par rapport à l'autre.

29. Système d'amplification laser selon l'une des revendications précédentes, **caractérisé en ce que** chaque volume de corps solide présentant l'agent laser actif est disposé dans son propre corps solide.
